# EUROPÄISCHE PATENTSCHRIFT

(11) **EP 4 294 744 B1**
(45) Veröffentlichungstag und Bekanntmachung des Hinweises auf die Patenterteilung: **04.11.2026**
(21) Anmeldenummer: 22711062.4
(22) Anmeldetag: 08.03.2022
(51) Int. Cl.: B65G 1/137, B65G 1/06, A47F 11/06

(54) **LAGERREGAL MIT VORRICHTUNG ZUM ANZEIGEN EINES LAGERGUTES**
STORAGE RACK HAVING AN APPARATUS FOR DISPLAYING A STORED ARTICLE
RAYONNAGE DE STOCKAGE POURVU D'UN DISPOSITIF POUR EXPOSER UN ARTICLE STOCKÉ

(30) Priorität: 29.03.2021 DE 102021107890
(43) Veröffentlichungstag der Anmeldung: 27.12.2023
(73) Patentinhaber: Hänel GmbH & Co. KG, 74177 Bad Friedrichshall (DE)
(72) Erfinder: ELLWANGER, Harald, 74196 Neuenstadt (DE)
(74) Vertreter: Flügel Preissner Schober Seidel
(86) Internationale Anmeldenummer: PCT/EP2022/055908
(87) Internationale Veröffentlichungsnummer: WO 2022/207255

(56) Entgegenhaltungen:
- DE-A1- 102015 209 579
- DE-A1- 102018 221 074
- DE-A1- 102019 118 046

## Beschreibung

Die Erfindung betrifft ein Lagerregal aufweisend eine Vorrichtung zum Anzeigen eines Lagergutes, insbesondere für ein automatisiertes Lagerregal, mindestens eine Bedienöffnung zur Zuführung und Entnahme von Lagergut, eine automatische Transportvorrichtung, eine Vielzahl von übereinander angeordneten Trägerstützen zur Abstützung von Lagergutträgern, wobei mittels der automatischen Transportvorrichtung ein Lagergutträger zu der mindestens einen Bedienöffnung förderbar ist, wobei die Vorrichtung zum Anzeigen eines Lagergutes auf dem Lagergutträger an einer Oberseite der mindestens einen Bedienöffnung angeordnet ist, und wobei die Vorrichtung wenigstens eine Leuchteinrichtung mit einer Vielzahl an separat ansteuerbaren Leuchtelementen umfasst.

Derartige Anzeigevorrichtungen für ein Lagerregal sind bekannt und dienen zum schnellen und effizienten Auffinden des gewünschten, auf einem Lagergutträger abgelegten Lagerguts. Dies ist insbesondere beim Kommissionieren von diversen Lagergütern durch eine Bedienperson vorteilhaft. Üblicherweise wird ein Lagergutträger für ein derartiges Lagerregal zur Beschickung und Entnahme von Lagergut in eine Bedienöffnung mittels einer automatisierten Transportvorrichtung transportiert.

In DE 10 2007 004 866 A1 wird ein Lagerregal offenbart, das eine Anzeigeeinrichtung mit einer Vielzahl an separat ansteuerbare Leuchtelementen an einer Oberseite einer Bedienöffnung aufweist. Diese Leuchtelemente sind über die gesamte Oberseite gleichmäßig verteilt angeordnet und fest in der Oberseite der Bedienöffnung integriert.

Ferner ist es bekannt, ein Lagerregal mit einer fest an der Oberseite angebrachten Anzeigeeinrichtung zu versehen. Ein derartiges Lagerregal ist beispielsweise aus EP 3172152 A1 bekannt. Eine Anzeigeeinrichtung, die an nur einer Stelle der Oberseite fest verbaut ist, kann Lagergut im Randbereich des Lagergutträgers nur eingeschränkt markieren. Denn bei breiten Lagergutträgern verläuft der Lichtstrahl zur Markierung von im Randbereich befindlichem Lagergut ausgehend von einer mittig fixierten Anzeigeeinrichtung in einem flachen Winkel. Folglich wird kleineres Lagergut durch ein größeres vor dem kleineren Lagergut abgelegtem Lagergut verdeckt.

In DE 299 05 396 U1 ist ein Lagerregal offenbart, welches aufrecht stehende Lichtleisten aufweist, die an der Seitenwand einer Bedienöffnung eines Lagerregal fest montiert sind. Diese Anzeigevorrichtung eignet sich jedoch nur bei schmalen Bedienöffnungen. Denn es kann lediglich die Tiefe angezeigt, in welcher sich das gewünschte Lagergut befindet. Eine exakte Position des Lagerguts, insbesondere von mittig angeordnetem Lagergut, kann mittels eines derartigen Systems nicht genau angezeigt werden.

DE 10 2019 118 046 A1 offenbart ein automatisiertes Lagerregal mit einer Bedienöffnung und einer an der Oberseite der Bedienöffnung angeordneten Verfahrvorrichtung, welche in zwei Achsen verfahrbar ist und eine Bilderfassungseinheit aufweist, die dazu dient, eine verdeckungsfreie Aufnahme des Lagerguts zu erstellen. Um die Bilderfassungseinheit sind Leuchtelemente angeordnet, um ein zu erfassendes Lagergut für die Aufnahme auszuleuchten.

Ausgehend hiervon liegt der Erfindung die Aufgabe zugrunde, ein verbessertes Lagerregal zu schaffen, welches einen einfachen Aufbau aufweist und kostengünstig ist.

Zur Lösung dieser Aufgabe wird ein Lagerregal gemäß Anspruch 1 vorgeschlagen. Vorteilhafte Ausgestaltungen sind Gegenstand der abhängigen Ansprüche.

Das erfindungsgemäße Lagerregal zeichnet sich durch eine Leuchteinrichtung aus, die stabförmig ausgebildet ist und eine Vielzahl an Leuchtelementen aufweist, die in einer Reihe entlang der stabförmigen Leuchteinrichtung versetzt zueinander angeordnet sind. Des Weiteren zeichnet sich die Leuchteinrichtung dadurch aus, dass die Leuchtelemente im Wesentlichen senkrecht nach unten ausgerichtet sind. Ferner erstreckt sich die stabförmige Leuchteinrichtung in einer ersten Horizontalrichtung und ist in einer zweiten Horizontalrichtung verfahrbar.

Ferner erstreckt sich die stabförmige Leuchteinrichtung über den gesamten Lagergutträger in der ersten Horizontalrichtung und ist über den gesamten Lagergutträger entlang der zweiten Horizontalrichtung verfahrbar, sodass Lagergut auf dem gesamten Lagergutträger angezeigt werden kann. Die erste Horizontalrichtung verläuft in vorteilhafter Weise entlang der Tiefe einer Bedienöffnung und die zweite Horizontalrichtung entlang der Breite der Bedienöffnung des Lagerregals. Allerdings wäre auch eine umgekehrte Anordnung denkbar.

Da die Anzeigevorrichtung nur in einer Horizontalrichtung verfahrbar ist und in der zweiten Horizontalrichtung eine Vielzahl an separat ansteuerbaren Leuchtelemente aufweist, zeichnet sich das erfindungsgemäße Lagerregal durch einen einfachen und kostengünstigen Aufbau aus. Entgegen zu einer bekannten Anzeigevorrichtung, welche sowohl in der ersten Horizontalrichtung als auch in der zweiten Horizontalrichtung verfahrbar ist, benötigt die Anzeigevorrichtung nur entlang einer Horizontalrichtung ein Antriebsmittel.

Ferner ermöglicht die Vielzahl an separat ansteuerbaren Leuchtelemente, dass mehrere Lagerorte gleichzeitig angezeigt werden können. Des Weiteren ist es besonders einfach, in einer bestehenden Bedienöffnung eines Lagerregals die erfindungsgemäße Anzeigevorrichtung nachzurüsten.

Die Anzeigevorrichtung weist einen flachen Aufbau auf. Beispielsweise umfasst hierzu die stabförmige Leuchteinrichtung ein Leuchtdiodenband oder einen Leuchtdiodenstab, welcher Leuchtdioden (LED) als Leuchtelemente aufweist. Ferner wäre es auch denkbar, ein Trägerelement vorzusehen, an welchem im Wesentlichen entlang einer Reihe eine Vielzahl an separat ansteuerbaren Leuchtelemente angeordnet ist. Der flache Aufbau bewirkt, dass nur ein geringer Bauraum für die Anzeigevorrichtung in der Bedienöffnung eingenommen wird.

Unter Lagerregal ist insbesondere ein Vertikallift oder ein Kleinteilelager zu verstehen.

Vorteilhaft sind die Leuchtelemente als Leuchtdioden (LED) oder Laserpointer ausgebildet. Leuchtdioden eignen sich besonders, da diese einen nur sehr geringen Bauraumbedarf haben und flach ausgebildet sind. Ferner sind Leuchtdioden besonders energieeffizient und weisen eine geringe Wärmeentwicklung auf.

Vorteilhaft können die Leuchtelemente einzeln oder in Gruppen ansteuerbar sein.

Ferner sind die Leuchtelemente in vorteilhafter Weise geeignet, Licht in unterschiedlichen Farben auszustrahlen. Somit können zusätzlich zur räumlichen Anzeige eines Lagerorts Informationen zur Priorisierung gegenüber weiteren Aufträgen, die zeitgleich angezeigt werden, an einen Bediener des Lagerregals vermittelt werden. Beispielsweise wird das zuerst auszulagernde Lagergut mit einer roten Farbe hervorgehoben, wobei das oder die nachfolgenden Lagergüter mit einer anderen Farbe, wie beispielsweise blau oder grün, angezeigt werden. Weiterhin kann vorgesehen sein, dass bei mehreren hintereinander gelagerten Lagerartikeln, der gewünschte Lagerartikel beispielsweise in "grün" und der räumlich davor und der räumlich dahinter liegende Lagerartikel in "rot" angezeigt werden. In weiterer vorteilhafter Ausgestaltung kann auch die Unterschreitung des Mindestbestandes mittels unterschiedlicher Farben angezeigt werden. Vorteilhaft sind die Leuchtelemente in wenigstens drei nebeneinander verlaufenden Reihen angeordnet. Mittels wenigstens drei nebeneinander verlaufenden Reihen ist es möglich, ein Lagergut zu Umranden oder mittels eines Kreuzes deutlicher hervorzuheben. Mehr als drei Reihen ermöglichen eine noch detailliertere oder größere Umrandung oder Kreuz, sodass das Lagergut deutlicher hervorgehoben wird.

Vorteilhaft ist die Leuchteinrichtung an mindestens einer Schiene geführt und längs der Schiene verfahrbar, wobei die Schiene an einer Oberseite der Bedienöffnung montiert ist. Schienen eignen sich besonders dadurch, dass diese eine präzise Ansteuerung der Position entlang der zweiten Horizontalrichtung ermöglichen. Hierunter sind auch Ausführungsformen mit zwei oder mehr Schienen umfasst. Insbesondere bei zwei oder mehr Schienen wird bei besonders langen stabförmigen Leuchtelementen eine besonders feste Anbindung gewährleistet. Die Schienen verlaufen hierzu in vorteilhafter Weise zumindest im jeweiligen gegenüberliegenden Randbereich der sich in der ersten Horizontalrichtung erstreckenden Leuchteinrichtung.

Bei einer vorteilhaften Ausgestaltung ist nur eine Schiene vorgesehen, an welcher die Leuchteinrichtung mittig angeordnet ist. Diese zeichnet sich insbesondere gegenüber zwei oder mehr Schienen durch eine einfache und schnelle Montage in der Bedienöffnung des Lagerregals aus.

Vorteilhaft ist der Leuchteinrichtung eine ansteuerbare Antriebseinheit zugeordnet, mittels der die Leuchteinrichtung verfahrbar ist.

Unter Antriebseinheit ist beispielsweise ein elektrischer Stellantrieb mit einem Schneckengetriebe oder einem Zahnrad zu verstehen.

In einer weiteren vorteilhaften Ausgestaltung weist die Anzeigevorrichtung mehrere stabförmige Leuchteinrichtungen auf, die separat ansteuerbar sind. Die Leuchteinrichtungen sind parallel nebeneinander entlang der zweiten Horizontalrichtung verteilt verfahrbar angeordnet. Bei besonders breiten Bedienöffnungen kann somit einerseits schnell eine anzuzeigende Position angefahren werden oder andererseits einem oder mehreren Bedienern durch beispielsweise unterschiedlichen Farben oder unterschiedliche Anzeigemustern mehrere Lagerorte entlang der zweiten Horizontalrichtung auf dem Lagergutträger angezeigt werden.

Vorteilhaft weist die Leuchteinrichtung eine Kamera auf. Mittels der Kamera können Aufnahmen des auf dem Lagergutträger befindlichen Lagerguts aufgenommen werden. Diese Aufnahmen können beispielsweise von einem Lagerverwaltungssystem zur Bestandsaufnahme verwendet und gespeichert werden.

Die Anzeigevorrichtung ist an einer Oberseite der Bedienöffnung des Lagerregals angeordnet. Darunter ist zu verstehen, dass sich die Anzeigevorrichtung im oberen Bereich der Bedienöffnung befindet. Dadurch ist es möglich, auf dem Lagergutträger befindliches Lagergut von oben anzuzeigen.

Vorteilhaft sind mindestens zwei zueinander beabstandete Regaltürme vorgesehen, die jeweils eine Vielzahl von Trägerstützen zur Abstützung der Lagergutträger aufweisen, und dass die automatische Transportvorrichtung zwischen den Regaltürmen angeordnet ist.

Vorteilhaft verlaufen die erste Horizontalrichtung entlang der Tiefe und die zweite Horizontalrichtung entlang der Breite der Bedienöffnung.

Nachfolgend wird die Erfindung anhand von Ausführungsbeispielen näher erläutert, die in den Figuren schematisch dargestellt sind. Hierbei zeigen:
- Fig. 1: eine perspektivische Ansicht eines erfindungsgemäßen Lagerregals;
- Fig. 2: ein Vertikalschnitt durch das erfindungsgemäße Lagerregal gemäß Fig. 1 im Bereich der Bedienöffnung;
- Fig. 3: eine Draufsicht von unten auf eine erfindungsgemäße Anzeigevorrichtung gemäß einer ersten Ausführungsform;
- Fig. 4: eine Draufsicht von unten auf eine Anzeigevorrichtung gemäß einer zweiten Ausführungsform;
- Fig. 5: eine Draufsicht von unten auf eine Anzeigevorrichtung gemäß einer dritten Ausführungsform;
- Fig. 6: eine Draufsicht von unten auf eine Anzeigevorrichtung gemäß einer vierten Ausführungsform; und
- Fig. 7: eine Draufsicht von unten auf eine Anzeigevorrichtung gemäß einer fünften Ausführungsform.

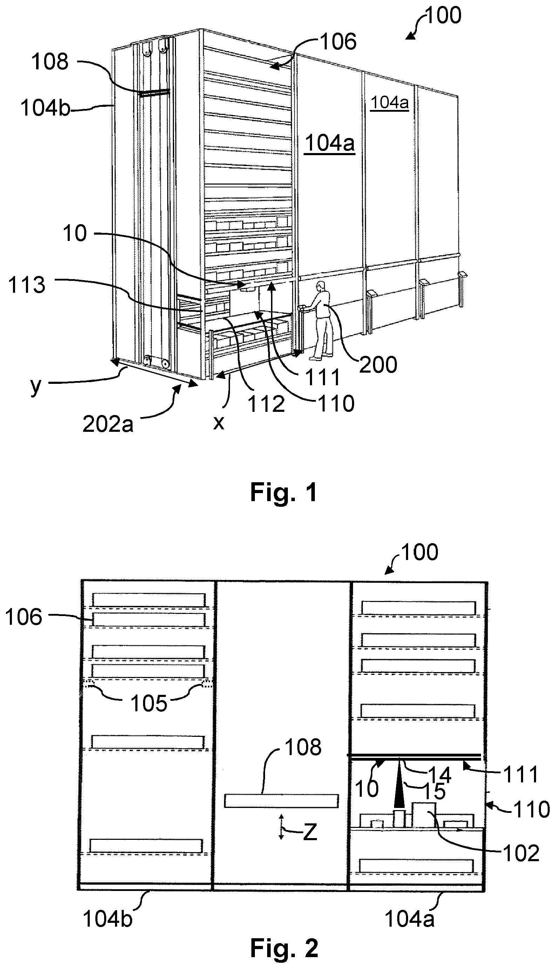

Fig. 1 und 2 zeigt ein automatisiertes Lagerregal 100, das als Vertikallift ausgebildet ist. Das Lagerregal 100 weist zwei zueinander beabstandete Regaltürme 104a, 104b mit einer Vielzahl von übereinander angeordneten Trägerstützen 105 zur Abstützung von Lagergutträgern 106 auf. Zwischen den zueinander beabstandeten Regaltürmen 104a, 104b ist eine automatische Transportvorrichtung 108 verfahrbar angeordnet. Die Lagergutträger 106 können mittels der automatischen Transportvorrichtung 108 zu einer Bedienöffnung 110 zur Zuführung und Entnahme von Lagergut 102 verfahren werden. Die Bedienöffnung 110 weist eine Oberseite 111, eine Unterseite 112 und ein Zugangsfenster 113 auf.

Die erste Horizontalrichtung y erstreckt sich entlang der Tiefe und die zweite Horizontalrichtung x erstreckt sich entlang der Breite des Lagerregals 100. Die Tiefe der Bedienöffnung 110 erstreckt sich entlang der ersten Horizontalrichtung y und das Zugangsfenster 113 erstreckt sich entlang der zweiten Horizontalrichtung x. Die Bedienöffnung 110 ist zur Zuführung und Entnahme von Lagergut 102 über das Zugangsfenster 113 zugänglich, welche einem Bediener 200 zugewandt ist.

An der Oberseite 111 der Bedienöffnung 110 ist eine Anzeigeeinrichtung 10 angeordnet, die eine stabförmige Leuchteinrichtung 12 zum Anzeigen von Lagergut 102 aufweist. Die Leuchtelemente 14 senden jeweils einen Lichtstrahl 15 aus, der im Wesentlichen senkrecht nach unten auf das Lagergut 102 ausgerichtet ist.

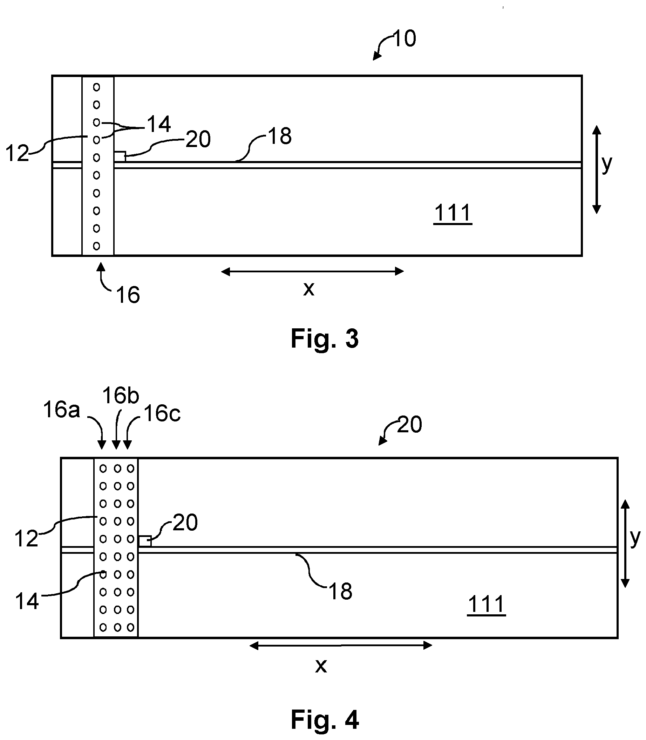

Der Aufbau der Anzeigevorrichtung 10 ist in Fig. 3 detailliert beschrieben. Anhand von Fig. 4 bis Fig. 7 sind vorteilhafte Ausgestaltungen der Anzeigevorrichtung 10 beschrieben, welche auch miteinander kombiniert werden können. Für gleiche oder funktionsgleiche Bauteile der in Fig. 3 bis Fig. 7 gezeigten Anzeigeeinrichtung 10 sind dieselben Bezugszeichen verwendet.

Fig. 3 zeigt die Anzeigevorrichtung 10 mit einer Leuchteinrichtung 12. Die Leuchteinrichtung 12 ist stabförmig ausgebildet und erstreckt sich entlang der ersten Horizontalrichtung y. Die Leuchteinrichtung 12 weist eine Vielzahl an Leuchtelementen 14, die in einer Reihe 16 entlang der stabförmigen Leuchteinrichtung 12 versetzt zueinander angeordnet sind. Entlang der zweiten Horizontalrichtung x ist die Leuchteinrichtung 12 an einer Schiene 18 geführt und verfahrbar. Die Schiene 18 kann beispielsweise an der Oberseite der Bedienöffnung 110 montiert werden, sodass sich die Anzeigevorrichtung 10 im oberen Bereich der Bedienöffnung 110 befindet.

Entlang der Schiene 18 wird die Leuchteinrichtung 12 mittels einer ansteuerbaren Antriebseinheit 20 verfahren. Die Antriebseinheit 20 ist derart ausgebildet, schnelle Bewegungen der Leuchteinrichtung 12 auszuführen, sodass beispielsweise Zeichen mittels der Anzeigeeinrichtung auf eine Oberfläche, wie beispielsweise der Unterseite 112 der Bedienöffnung 110 projiziert werden können. Als Zeichen ist beispielsweise eine skizzenhafte Sanduhr zu verstehen, welches als Wartesymbol verwendet wird, bis der Lagergutträger 106 in die Bedienöffnung 110 eingeführt wird.

Die Leuchtelemente 14 können einzeln oder in Gruppen angesteuert werden. Weiterhin kann vorgesehen sein, dass die Leuchteinrichtung 12 Licht in unterschiedlichen Farben ausstrahlt. Beispielsweise kann vorgesehen sein, dass bei mehreren hintereinander gelagerten Lagerartikeln, der gewünschte Lagerartikel beispielsweise in "grün" und der räumlich davor und der räumlich dahinter liegende Artikel in "rot" angezeigt werden. Weiterhin kann die Unterschreitung des Mindestbestandes mittels unterschiedlicher Farben angezeigt werden.

Fig. 4 zeigt eine weitere Anzeigevorrichtung 20, welche sich zu der Anzeigevorrichtung 10 gemäß Fig. 3 dadurch unterscheidet, dass die Vielzahl der Leuchtelemente 14 entlang drei nebeneinander entlang der ersten Horizontalrichtung y verlaufenden Reihen 16a, 16b, 16c angeordnet sind.

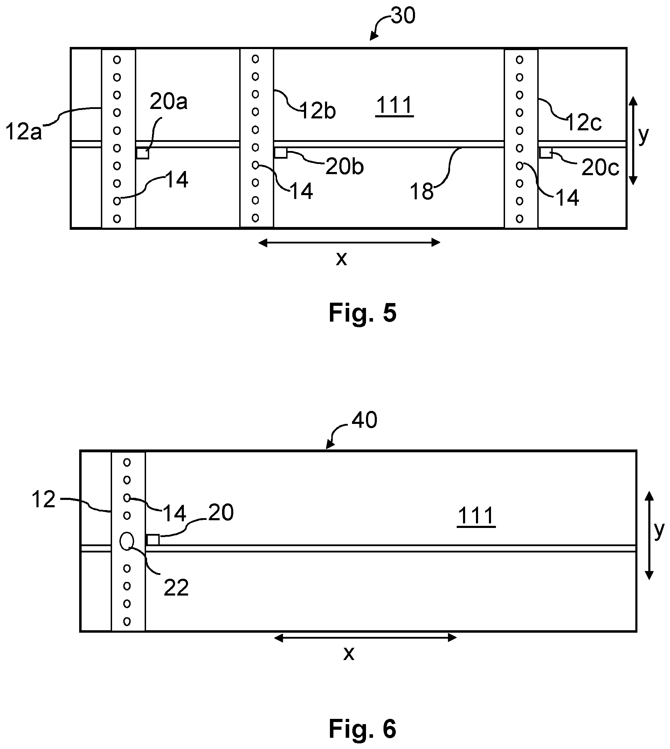

Fig. 5 zeigt eine weitere Anzeigevorrichtung 30, welche sich zu der Anzeigevorrichtung 10 gemäß Fig. 3 dadurch unterscheidet, dass mehrere Leuchteinrichtungen 12a, 12b, 12c entlang einer zweiten Horizontalrichtung x verfahrbar angeordnet sind. Der ersten Leuchteinrichtung 12a ist eine erste Antriebseinheit 20a, der zweiten Leuchteinrichtung 12b ist eine zweite Antriebseinheit 20b und der dritten Leuchteinrichtung 12c ist eine dritte Antriebseinheit 20c zugeordnet. Die Leuchteinrichtungen 12a, 12b, 12c sind separat ansteuerbar.

Fig. 6 zeigt eine andere Anzeigevorrichtung 40, welche sich zu der Anzeigevorrichtung 10 gemäß Fig. 3 dadurch unterscheidet, dass die Leuchteinrichtung 12 zusätzlich eine Kamera 22 aufweist. Das Blickfeld der Kamera 22 ist ebenfalls im Wesentlichen senkrecht nach unten ausgerichtet. Ferner kann die Kamera 22 ein Objektiv mit einer Festbrennweite aufweisen, die es ermöglicht, das gesamte Lagerregal zu erfassen. Zur Aufnahme einer Abbildung können die Leuchtelemente 14 zur Ausleuchtung dienen.

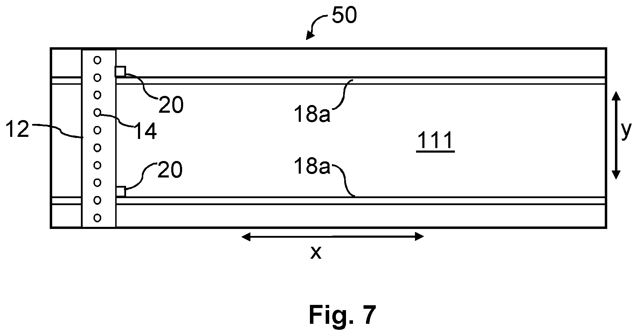

Fig. 7 zeigt eine weitere Anzeigevorrichtung 50, welche sich zu der Anzeigevorrichtung 10 gemäß Fig. 3 darin unterscheidet, dass die Leuchteinrichtung 12 zwei Schienen 18a, 18b aufweist. Die Schienen 18a, 18b sind im Randbereich der Leuchteinrichtung 12 positioniert.

Zur Beschickung und Entnahme von Lagergut 102 gibt der Bediener 200 einen Kommissionierauftrag in ein Steuergerät ein. Mittels der Transportvorrichtung 108 wird der Lagergutträger 106 mit dem angeforderten und auf dem Lagergutträger 106 befindlichem Lagergut 102 zur Bedienöffnung 110 transportiert. Anschließend wird mittels der Anzeigevorrichtung 10 die Position des Lagerguts 102 auf dem Lagergutträger 106 dem Bediener 200 über den Lichtstrahls 15 angezeigt. Hierzu verfährt die Leuchteinrichtung 12 entlang der zweiten Horizontalrichtung x bis diese über dem Lagerort des Lagerguts 102 positioniert ist. Anschließend werden nur die Leuchtelemente 14 entlang der ersten Horizontalrichtung y angesteuert, welche zur Anzeige des Lagerorts des Lagerguts 102 in der Tiefe benötigt werden.

Da die Leuchtelemente 14 bis in die Randbereiche der Leuchteinrichtung 12 angebracht werden können und die Leuchteinrichtung 12 sich sowohl über die gesamte Tiefe des Lagergutträger 106 erstreckt und entlang der gesamten Breite des Lagergutträgers 106 verfahrbar ist, kann eine exakte Anzeige von Lagergut 102 auf dem gesamten Lagergutträger 106 gewährleistet werden. Selbst Lagergut 102 das sich im Randbereichen des Lagergutträgers 106 positioniert wird, kann verdeckungsfrei angezeigt werden.

Die erfindungsgemäße Anzeigevorrichtung 10 zeichnet sich durch einen einfachen und kostengünstigen Aufbau sowie eine vielseitige Verwendbarkeit aus. Vor allem ist die nachträgliche Montage in einer Bedienöffnung 110 eines Lagerregals 100 möglich.

### Bezugszeichenliste

- 10: Anzeigevorrichtung
- 12: Leuchteinrichtung
- 14: Leuchtelement
- 16: Reihe
- 16a: erste Reihe
- 16b: zweite Reihe
- 16c: dritte Reihe
- 18: Schiene
- 20: Antriebseinheit
- 22: Kamera

- 100: Lagerregal
- 102: Lagergut
- 105: Trägerstützen
- 106: Lagergutträger
- 108: Transportvorrichtung
- 110: Bedienöffnung
- 111: Oberseite
- 112: Unterseite
- 113: Zugangsfenster

- y: erste Horizontalrichtung
- x: zweite Horizontalrichtung

## Patentansprüche

1. Lagerregal (100) aufweisend eine Vorrichtung (10, 20, 30, 40, 50) zum Anzeigen eines Lagergutes (102), mindestens eine Bedienöffnung (110) zur Zuführung und Entnahme von Lagergut (102), eine automatische Transportvorrichtung (108), eine Vielzahl von übereinander angeordneten Trägerstützen (105) zur Abstützung von Lagergutträgern (106), wobei mittels der automatischen Transportvorrichtung (108) ein Lagergutträger (106) zu der mindestens einen Bedienöffnung (110) förderbar ist, wobei die Vorrichtung (10, 20, 30, 40, 50) zum Anzeigen eines Lagergutes (102) auf dem Lagergutträger (106) an einer Oberseite der mindestens einen Bedienöffnung (110) angeordnet ist, und wobei die Vorrichtung (10, 20, 30, 40, 50) wenigstens eine Leuchteinrichtung (12) mit einer Vielzahl an separat ansteuerbaren Leuchtelementen (14) umfasst, **dadurch gekennzeichnet, dass** die Leuchteinrichtung (12):
a. stabförmig ausgebildet ist;
b. eine Vielzahl an Leuchtelementen (14) aufweist, die in einer Reihe (16) entlang der stabförmigen Leuchteinrichtung (12) versetzt zueinander angeordnet und im Wesentlichen senkrecht nach unten ausgerichtet sind;
c. wobei die Leuchteinrichtung (12) sich in einer ersten Horizontalrichtung (y) über den gesamten Lagergutträger (106) erstreckt; und
d. wobei die Leuchteinrichtung (12) in einer zweiten Horizontalrichtung (x) über den gesamten Lagergutträger (106) verfahrbar ist.

2. Lagerregal (100) nach Anspruch 1, **dadurch gekennzeichnet, dass** die Leuchtelemente (14) als Leuchtdioden (LED) oder Laserpointer ausgebildet sind.

3. Lagerregal (100) nach einem der vorhergehenden Ansprüche **dadurch gekennzeichnet, dass** die Leuchtelemente(14) einzeln oder in Gruppen ansteuerbar sind.

4. Lagerregal (100) nach einem der vorhergehenden Ansprüche, **dadurch gekennzeichnet, dass** die Leuchtelemente (14) geeignet sind, Licht in unterschiedlichen Farben auszustrahlen.

5. Lagerregal (100) nach einem der vorhergehenden Ansprüche, **dadurch gekennzeichnet, dass** die Leuchtelemente (14) in wenigstens drei nebeneinander verlaufenden Reihen (16a, 16b, 16c) angeordnet sind.

6. Lagerregal (100) nach einem der vorhergehenden Ansprüche, **dadurch gekennzeichnet, dass** die Leuchteinrichtung (12) an mindestens einer Schiene (18) geführt und längs der Schiene (18) verfahrbar ist, wobei die Schiene (18) an der Oberseite der Bedienöffnung (110) montiert ist.

7. Lagerregal (100) nach Anspruch 4, **dadurch gekennzeichnet, dass** die Leuchteinrichtung (12) mittig an der Schiene (18) angeordnet ist.

8. Lagerregal (100) nach einem der vorhergehenden Ansprüche, **gekennzeichnet durch** eine ansteuerbare Antriebseinheit (20), mittels der die Leuchteinrichtung (12) verfahrbar ist, und welche der Leuchteinrichtung (12) zugeordnet ist.

9. Lagerregal (100) nach einem der vorhergehenden Ansprüche, **gekennzeichnet, durch** mehrere stabförmige Leuchteinrichtungen (12), die separat ansteuerbar sind.

10. Lagerregal (100) nach einem der Ansprüche 1 bis 8, **dadurch gekennzeichnet, dass** die Leuchteinrichtung (12) eine Kamera (22) aufweist.

11. Lagerregal (100) nach einem der vorhergehenden Ansprüche, **dadurch gekennzeichnet, dass** mindestens zwei zueinander beabstandete Regaltürme (104a, 104b) vorgesehen sind, die jeweils eine Vielzahl von Trägerstützen (105) zur Abstützung der Lagergutträger (106) aufweisen, und dass die automatische Transportvorrichtung (108) zwischen den Regaltürmen (104a, 104b) angeordnet ist.

12. Lagerregal (100) nach Anspruch 11, **dadurch gekennzeichnet, dass** die erste Horizontalrichtung (y) entlang der Tiefe und die zweite Horizontalrichtung entlang (x) der Breite der Bedienöffnung (110) verläuft.

## Claims

1. A storage shelf (100) comprising a device (10, 20, 30, 40, 50) for displaying stored goods (102), at least one access opening (110) for feeding in and removing stored goods (102), an automatic transport device (108), a plurality of support columns (105) arranged one above the other for supporting storage item carriers (106), wherein a storage item carrier (106) can be conveyed to the at least one access opening (110) by means of the automatic transport device (108), wherein the device (10, 20, 30, 40, 50) for displaying stored goods (102) on the storage item carrier (106) is arranged at an upper side of the at least one access opening (110), and wherein the device (10, 20, 30, 40, 50) comprises at least one lighting device (12) with a plurality of separately controllable light elements (14), **characterized in that** the lighting device (12):
a. is of a rod-shaped design;
b. comprises a plurality of light elements (14) which are arranged in a row (16) along the rod-shaped lighting device (12) in a staggered manner relative to one another and are oriented substantially vertically downwards;
c. wherein the lighting device (12) extends in a first horizontal direction (y) across the entire storage item carrier (106); and
d. wherein the lighting device (12) is movable in a second horizontal direction (x) across the entire storage item carrier (106).

2. Storage shelf (100) according to claim 1, **characterized in that** the light elements (14) are designed as light-emitting diodes (LEDs) or laser pointers.

3. Storage shelf (100) according to one of the preceding claims, **characterized in that** the light elements (14) can be controlled individually or in groups.

4. Storage shelf (100) according to one of the preceding claims, **characterized in that** the light elements (14) are capable of emitting light in different colours.

5. Storage shelf (100) according to one of the preceding claims, **characterized in that** the light elements (14) are arranged in at least three adjacent rows (16a, 16b, 16c).

6. Storage shelf (100) according to one of the preceding claims, **characterized in that** the lighting device (12) is guided on at least one rail (18) and is movable along the rail (18), wherein the rail (18) is mounted on the upper side of the access opening (110).

7. Storage shelf (100) according to claim 4, **characterized in that** the lighting device (12) is arranged centrally on the rail (18).

8. Storage shelf (100) according to one of the preceding claims, **characterized by** a controllable drive unit (20) by means of which the lighting device (12) can be moved, and which is associated with the lighting device (12).

9. Storage shelf (100) according to one of the preceding claims, **characterized by** a plurality of rod-shaped lighting devices (12) which can be controlled separately.

10. Storage shelf (100) according to any one of claims 1 to 8, **characterized in that** the lighting device (12) comprises a camera (22).

11. Storage shelf (100) according to any one of the preceding claims, **characterized in that** at least two spaced-apart rack towers (104a, 104b) are provided, each comprising a plurality of support columns (105) for supporting the storage item carriers (106), and that the automatic transport device (108) is arranged between the rack towers (104a, 104b).

12. Storage shelf (100) according to claim 11, **characterized in that** the first horizontal direction (y) extends along the depth and the second horizontal direction (x) extends along the width of the access opening (110).

## Revendications

1. Rayonnage de stockage (100) comprenant un dispositif (10, 20, 30, 40, 50) destiné à signaler la présence d'un article stocké (102), au moins une ouverture de service (110) pour l'introduction et le retrait d'articles stockés (102), un dispositif de transport automatique (108), une pluralité de supports (105) superposés destinés à soutenir des porte-marchandises (106), un porte-marchandises (106) pouvant être acheminé vers la au moins une ouverture de service (110) au moyen du dispositif de transport automatique (108), le dispositif (10, 20, 30, 40, 50) est disposé sur une face supérieure de ladite au moins une ouverture de service (110) pour signaler la présence d'une article stocké (102) sur le support de un porte-marchandises (106), et le dispositif (10, 20, 30, 40, 50) comprend au moins un dispositif d'éclairage (12) comportant une pluralité d'éléments lumineux (14) pouvant être commandés séparément, **caractérisé en ce que** le dispositif d'éclairage (12) :
a. a la forme d'une tige ;
b. comporte une pluralité d'éléments lumineux (14) qui sont disposés en décalé les uns par rapport aux autres en une rangée (16) le long du dispositif d'éclairage en forme de tige (12) et qui sont orientés essentiellement verticalement vers le bas ;
c. le dispositif d'éclairage (12) s'étendant dans une première direction horizontale (y) sur toute la longueur du support de porte-marchandises (106) ; et
d. le dispositif d'éclairage (12) pouvant se déplacer dans une deuxième direction horizontale (x) sur toute la longueur du support de porte-marchandises (106).

2. Rayonnage de stockage (100) selon la revendication 1, **caractérisée en ce que** les éléments lumineux (14) sont conçus sous forme de diodes électroluminescentes (LED) ou de pointeurs laser.

3. Rayonnage de stockage (100) selon l'une des revendications précédentes, **caractérisé en ce que** les éléments lumineux (14) peuvent être commandés individuellement ou par groupes.

4. Rayonnage de stockage (100) selon l'une des revendications précédentes, **caractérisé en ce que** les éléments lumineux (14) sont aptes à émettre de la lumière de différentes couleurs.

5. Rayonnage de stockage (100) selon l'une des revendications précédentes, **caractérisé en ce que** les éléments lumineux (14) sont disposés en au moins trois rangées (16a, 16b, 16c) juxtaposées.

6. Rayonnage de stockage (100) selon l'une des revendications précédentes, **caractérisé en ce que** le dispositif d'éclairage (12) est guidé sur au moins un rail (18) et peut se déplacer le long de ce rail (18), le rail (18) étant monté sur la face supérieure de l'ouverture de service (110).

7. Rayonnage de stockage (100) selon la revendication 4, **caractérisé en ce que** le dispositif d'éclairage (12) est disposé au centre du rail (18).

8. Rayonnage de stockage (100) selon l'une des revendications précédentes, **caractérisé par** une unité d'entraînement commandable (20) au moyen de laquelle le dispositif d'éclairage (12) peut être déplacé, et qui est associée au dispositif d'éclairage (12).

9. Rayonnage de stockage (100) selon l'une des revendications précédentes, **caractérisé par** plusieurs dispositifs d'éclairage en forme de tige (12) pouvant être commandés séparément.

10. Rayonnage de stockage (100) selon l'une des revendications 1 à 8, **caractérisé en ce que** le dispositif d'éclairage (12) comporte une caméra (22).

11. Rayonnage de stockage (100) selon l'une des revendications précédentes, **caractérisé en ce qu'**au moins deux tours de rayonnage espacées l'une de l'autre (104a, 104b) espacées les unes des autres, qui comportent chacune une pluralité de supports (105) destinés à soutenir les supports de porte-marchandises (106), et **en ce que** le dispositif de transport automatique (108) est disposé entre les tours de rayonnage (104a, 104b).

12. Rayonnage de stockage (100) selon la revendication 11, **caractérisé en ce que** la première direction horizontale (y) s'étend le long de la profondeur et la deuxième direction horizontale (x) le long de la largeur de l'ouverture de service (110).
